# EUROPÄISCHE PATENTSCHRIFT

(11) **EP 0 809 059 B1**
(45) Veröffentlichungstag und Bekanntmachung des Hinweises auf die Patenterteilung: **18.12.2002**
(21) Anmeldenummer: 97107617.9
(22) Anmeldetag: 09.05.1997
(51) Int. Cl.: F16K 41/02

(54) **Dichtung eines Ventilshafts**
Valve spindle sealing
Garniture d'étanchéité pour le tige de manoeuvre d'un robinet

(30) Priorität: 22.05.1996 DE 19620694
(43) Veröffentlichungstag der Anmeldung: 26.11.1997
(73) Patentinhaber: Xomox International GmbH & Co., 88131 Lindau (DE)
(72) Erfinder: Gonsior, Wolfgang, 88131 Bodolz (DE)
(74) Vertreter: Schmitt, Meinrad, Dipl.-Ing.

(56) Entgegenhaltungen:
- EP-A- 0 485 743
- DE-A- 4 331 968
- DE-B- 1 288 392
- FR-A- 2 315 046
- FR-A- 2 412 017
- GB-A- 2 074 294

## Beschreibung

Die Erfindung bezieht sich auf eine Ventilanordnung gemäß den im Oberbegriff des Patentanspruchs 1 angegebenen Merkmalen.

Eine derartige Ventilanordnung ist aus der DE 1 288 392 bekannt und enthält in einem Gehäuse ein mittels eines Schaftes drehbar angeordnetes Absperrelement. Das Gehäuse ist innen mit einer Auskleidung versehen und der Schaft weist eine Beschichtung, wobei in einem den Schaft umgebenden Ringraum ein Dichtelement angeordnet ist. Das Gehäuse besteht bei der vorbekannten Ventilanordnung aus drei miteinander verbundenen Gehäuseteilen, wobei das mittlere Gehäuseteil einen Stutzen enthält, durch welchen der Schaft nach außen geführt ist. Das dritte, mittlere Gehäuseteil erfordert im Vergleich mit einer zweiteiligen Gehäuseausbildung einen zusätzlichen Aufwand, und zwar vor allem im Hinblick auf die Anbringung der erforderlichen Auskleidung.

Aus der FR 2 412 017 ist eine Ventilanordnung mit einem einteilig ausgebildeten Gehäuse ohne Auskleidung bekannt, welches an einem axialen Ende in einem erweiterten Innenraum eine Hülse zur axialen Festlegung des als Kugel ausgebildeten Absperrelements enthält. An den Gehäusestutzen radial nach außen anschließend ist ein Ringkörper angeordnet, welcher eine Feder, Lagerelemente und Feststellmittel für einen Verlängerungskörper des Schaftes zur Einleitung der Drehbewegung auf das Absperrelement enthält. Der Ringkörper weist nicht nur eine erhebliche Baulänge auf, sondern ist notwendiger Bestandteil der Ventilanordnung, welche ohne denselben nicht funktionsfähig ist.

Des weiteren ist aus der DE 43 31 968 A1 eine Ventilanordnung mit einem zweiteiligen und innen ausgekleideten Gehäuse bekannt, wobei ein Gehäuseteil einen mit einer Beschichtung versehenen Schaft aufnimmt Am außenliegenden Ende des Schaftes ist zur Erzeugung einer Vorspannung auf das den Schaft umgebende Dichtelement eine Buchse angeordnet, welche mittels Unterlegscheiben oder Federn mittels eines mit dem Stutzen verbundenen Deckels festgelegt ist. Die Einstellung oder Veränderung der Vorspannung ist nicht ohne weiteres möglich und erfordert zusätzliche Maßnahmen.

Ferner ist aus dem US-Patent 4 930 748 eine als Absperr- und Regelhahn ausgebildete Ventilanordnung bekannt, deren als Küken ausgebildetes Absperrelement mit einem Schaft drehfest verbunden und in einem Gehäuse drehbar angeordnet ist, wobei zur Abdichtung des Schaftes im Bereich eines Gehäusedeckels zwei Dichtelemente vorgesehen sind. Das erste Dichtelement ist an der Unterseite des Deckels im Inneren des Gehäuses auf einer Ringscheibe abgestützt, während das zweite Dichtelement dem Außenraum zugeordnet und bei Bedarf von außen nachstellbar ist. Aufgrund der Ausbildung des Absperrelements als Küken kann die axiale Stellung des Schaftes aufgrund von Fertigungstoleranzen, Abrieb, äußeren Kräften oder dergleichen sich verändern. Durch die Abstützung des inneren, ersten Dichtelements auf der Ringscheibe wird eine von der axialen Position des Schaftes unabhängige, funktionssichere Dichtung erreicht. Den erhöhten Sicherheitsvorschriften und Vorschriften zum Umweltschutz wird entsprochen, und die geforderten Grenzwerte für Lekraten werden für eine lange Lebensdauer eingehalten. Diese Ventilanordnung ist für besondere Anwendungsfälle und Einsatzgebiete ausgebildet und erfordert einen nicht unerheblichen Fertigungsaufwand.

Vor allem in der chemischen Industrie gelangen heute Armaturen mit Auskleidungen oder Beschichtungen aus Kunststoff zum Einsatz und zwar insbesondere aus PTFE (Polytetrafluoräthylen), FEP (Fluoräthylenpropylen), oder PFA (Perfluoralkoxy). Der Fertigungsaufwand und die Kosten, insbesondere für die Werkzeuge, zur Herstellung der Kunststoffauskleidungen für Gehäuse und Schaft sind erheblich. Werden für bestehende Anlagen die Sicherheitsanforderungen erhöht, so müssen regelmäßig die Armaturen gegen neue Armaturen ausgewechselt werden, welche diese Anforderungen erfüllen. Der Lagerhaltungsaufwand für Hersteller und Betreiber ist in solchen Fällen erheblich.

Aus dem deutschen Gebrauchsmuster DE 89 10 895 U 1 ist eine Ventilanordnung bekannt, welche als Kugelhahn ausgebildet ist. Das Gehäuse und ebenso die Absperrkugel sind mit einer Kunststoffbeschichtung versehen. An die drehbar im Gehäuse angeordnete Kugel ist einteilig ein Schaft angeformt, welcher aus dem Gehäuse nach außen geführt ist und von einem besonderen Stopfbuchsengehäuse umgeben ist. In dem Stopfbuchsengehäuse ist ein Dichtungselement angeordnet, welches mittels einer Feder beaufschlagt ist. Das zusätzliche Stopfbuchsengehäuse ist zum Teil außerhalb des Gehäuses der Ventilanordnung angeordnet und ragt mit einem anderen Teil in das Innere des genannten Gehäuse bis zur Kugel hinein. Es sind zusätzliche Maßnahmen für eine funktionssichere Abdichtung des Stopfbuchsengehäuses bezüglich des Ventilgehäuses erforderlich. Ferner ist auch das Stopfbuchsengehäuse mit einer Kunststoffbeschichtung versehen, wodurch ein erheblicher Fertigungsaufwand bedingt ist. Schließlich enthält das Stopfbuchsengehäuse im Bereich der erwähnten Feder nach außen führende Öffnungen, durch welche bei Schäden des Dichtelements das durch die Ventilanordnung strömende Medium austreten kann.

Ferner ist aus dem deutschen Gebrauchsmuster DE 84 31 238 U 1 eine nachrüstbare, doppelte Stopfbuchsenanordnung für einen Kugelhahn bekannt. Es ist ein Verlängerungsstück mit einer unteren Platte, einem Rohr und einer oberen Aufbauplatte vorgesehen, wobei in dem genannten vergleichsweise langen Rohr eine Spindelverlängerung angeordnet ist. Das Rohr und die beiden Platten sind über Schweißnähte miteinander verbunden. Ferner besitzt diese Anordnung keine Beschichtung oder Auskleidung und ist für den Einsatz unter hohen Sicherheitsanforderungen nicht ohne weiteres geeignet.

Schließlich ist aus der deutschen Patentschrift DE 40 16 541 C 2 eine Stopfbuchsendichtungspackung bekannt, welche in einer Aufnahme aktive und passive Dichtungsringe aufweist. Die passiven Stopfbuchsenringe sind zur Übertragung von Axialkräften ausgebildet und liegen abwechselnd mit ihrer radialen Innenfläche an dem Schaft oder mit ihrer radialen Außenfläche an der Wand der Aufnahme für die Stopfbuchsendichtung an. Eine Auskleidung oder Beschichtung ist nicht vorgesehen.

Hiervon ausgehend liegt der Erfindung die Aufgabe zugrunde, eine Ventilanordnung der genannten Art mit geringem konstruktiven Aufwand dahingehend weiterzubilden, daß die Lekrate minimiert werden kann und hohe Sicherheitsanforderungen, insbesondere gemäß TA-Luft, erfüllt werden. Die Ventilanordnung soll eine hohe Funktionssicherheit und eine große Lebensdauer aufweisen, und der Austausch oder Ersatz der Elemente soll problemlos durchführbar sein.

Die Lösung dieser Aufgabe erfolgt gemäß den Merkmalen des Patentanspruchs 1.

Die vorgeschlagene Ventilanordnung zeichnet sich durch einen einfachen und gleichwohl funktionsgerechten Aufbau aus. Entsprechend den Anforderungen wird die Ventilanordnung mit einer einfachen oder mit einer doppelten Schaftabdichtung ausgerüstet. Die doppelte Schaftabdichtung ermöglicht in zweckmäßiger Weise eine Lekageüberwachung oder Drucküberlagerung für erhöhte Dichtigkeitsanforderungen zum Außenraum bzw. zur Atmosphäre. Für die unterschiedlichen Einsatzbedingungen oder Anforderungen an die Dichtigkeit zur Atmosphäre gelangen angepaßte Dichtungssysteme bei einem einheitlichen Grunddesign zum Einsatz. Insbesondere Gehäuse und Schaft sind für beide Ausführungsformen gleich, und eine doppelte Anzahl der recht teueren Auskleidewerkzeuge für Gehäuse und Schaft entfällt. Darüberhinaus ist es von besonderem Vorteil, daß bereits fertig montierte Ventilanordnungen auch nachträglich beim Kunden umgerüstet werden können. Die Ausführungsform mit doppeltem Dichtungssystem ist in ihrer Bauhöhe gegenüber der Ausführungsform mit einfachen Dichtungssystem nur geringfügig vergrößert. Die Anschlußmaße für die Antriebsmontage und dergleichen bleiben unverändert, so daß übereinstimmende Anbauteile wie Brücken und Kupplung sowie Betätigungsorgane, wie Hebel oder dergl., für beide Ausführungsformen zum Einsatz gelangen. Desweiteren ist die Bedienung ebenso wie Nachstellungen von dergl. für beide Ausführungsformen identisch.

Das oder die Dichtelemente sind unmittelbar im Gehäuse bzw. dem Ringkörper angeordnet und liegen mit ihren radialen Außenflächen direkt an der Auskleidung des Gehäuses bzw. des Ringkörpers an. Der Innendurchmesser der Ringkörperauskleidung ist zweckmäßig gleich groß wie der Innendurchmesser der Auskleidung der Bohrung des Gehäuses für das Dichtelement.

Die erfindungsgemäße Ventilanordnung wird nachfolgend anhand eines Kugelhahns näher erläutert, doch erfolgt hierdurch keine Beschränkung der Erfindung. So kann die Ventilanordnung als Hahn mit einem konischen Küken, als Drehkegelventil oder als Klappe mit einer Klappenscheibe o.ä. ausgebildet sein. Entscheidend ist für alle Ausführungsformen der Ventilanordnung, daß wahlweise Dichtungssysteme für unterschiedliche Anforderungen zum Einsatz gelangen, während die übrigen Bauteile, und zwar vor allem das kunststoffausgekleidete Gehäuse sowie der kunststoffummantelte Schaft, übereinstimmend zum Einsatz gelangen.

Weiterbildungen und besondere Ausgestaltungen der Erfindung sind in den Unteransprüchen angegeben.

Nachfolgend wird die Erfindung anhand eines in der Zeichnung dargestellten besonderen Ausführungsbeispiels näher erläutert. Es zeigen:
- Fig. 1: einen axialen Schnitt eines Kugelhahns mit doppelter Schaftabdichtung,
- Fig. 2: teilweise geschnitten bzw. teilweise in einer axialen Ansicht den Kugelhahn in Blickrichtung II gemäß Fig. 1,
- Fig. 3: vergrößert den Bereich des Schaftes des Kugelhahns gemäß Fig. 1,
- Fig. 4: eine Aufsicht auf den Kugelhahn,
- Fig. 5: eine Ausführungsform des Kugelhahns gemäß Fig. 1, jedoch mit einfacher Schaftabdichtung,
- Fig. 6: teilweise geschnitten bzw. teilweise in einer axialen Ansicht in Blickrichtung VI den Kugelhahn gemäß Fig. 5.

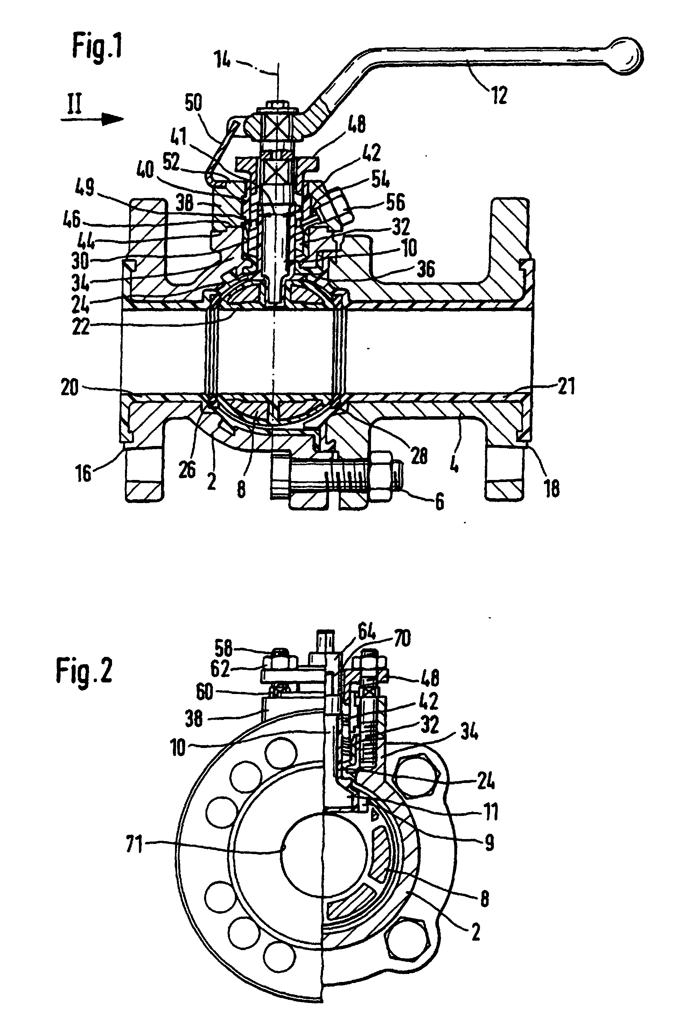

Der in Fig. 1 dargestellte Kugelhahn besitzt ein geteiltes Gehäuse mit zwei Gehäuseteilen 2, 4, welche mittels Schrauben 6 miteinander verbunden sind. Mit einem Absperrelement 8, welches gemäß Zeichnung oben eine Ausnehmung 9 aufweist und hier als eine Kugel ausgebildet ist, ist ein Schaft 10 drehfest verbunden. Der Schaft 10 besitzt einen in die Ausnehmung eingreifenden Ansatz 11, welcher korrespondierend zur Ausnehmung 9 ausgebildet ist. Die Ausnehmung 9 und der Ansatz 11 bilden somit Kopplungsmittel zur Drehmomentübertragung. Die Ausnehmung 9 ist zweckmäßig als Schlitz ausgebildet, in welchen der vorzugsweise plattenförmige Ansatz 11 des Schaftes eingreift. Mittels eines mit dem Schaft 10 drehfest gekoppelten Handgriffs 12 kann das Absperrelement 8, welches nachfolgend der Einfachheit halber als Kugel bezeichnet wird, in die gewünschte Drehposition bezüglich. der Drehachse 14 des Schaftes 10 bewegt werden. Anstelle des Handgriffes 12 kann im Rahmen der Erfindung auch ein anderes Betätigungsorgan vorgesehen sein, wobei hier nur beispielshaft auf einen elektrischen oder pneumatischen Antrieb oder ein Handrad zur manuellen Betätigung verwiesen sei.

Die Gehäuseteile 2, 4 enthalten jeweils einen Flansch 16, 18 zum Anschluß an eine hier nicht weiter dargestellte Rohrleitung. Die Gehäuseteile 2, 4 sind innen und ebenso im Bereich der Flansche 16, 18, also in den mediumführenden Bereichen, mit einer Auskleidung 20, 21 versehen, welche insbesondere aus Kunststoff, wie PTFE, FEP oder PFA besteht. Ferner ist das Absperrelement 8 mit einer entsprechenden Beschichtung 22 versehen. Schließlich weist auch der Schaft 10 eine derartige Beschichtung 24 auf. Die vorgeschlagene Ventilanordnung ist somit in zweckmäßiger Weise eine ausgekleidete bzw. beschichtete Ausführungsform, und sie entspricht somit auch bei höheren Temperaturen und Drücken den Sicherheitsanforderungen für korrosive und aggressive Strömungsmedien. Zur Abdichtung zwischen dem Absperrelement bzw. der Kugel 8 und den Gehäuseteilen 2, 4 sind Dichtringe 26, 28 in bekannter Weise vorgesehen.

Der Schaft 10 ist in einer Ausnehmung oder Bohrung 30 des ersten Gehäuseteils 2 eingesetzt, und auch diese Bohrung 30 ist mit der Auskleidung 20 versehen. In der Ausnehmung oder Bohrung 30 ist ein erstes Dichtelement 32 vorgesehen, welches am Schaft 10 bzw. dessen Beschichtung 24 dichtend anliegt. Mit diesem ersten Dichtelement 32 wird eine einfache, grundlegende Abdichtung im Bereich der Schaftdurchführung nach außen erreicht. In zweckmäßiger Weise ist das erste Dichtelement 32 als eine normale Packung, insbesondere als eine PTFE-Packung ausgebildet. Das erste Dichtelement 32 befindet sich innerhalb eines Stutzens 34 des ersten Gehäuseteils 2, und zwar in einem vergrößerten Ringraum, welcher zwischen dem mittleren zylindrischen Teil des Schaftes 10 und dem Stutzen 34 vorhanden ist. Das Dichtelement 32 liegt radial außen unmittelbar an der Auskleidung 20 der Ausnehmung oder Bohrung 30 des Gehäuses 2 bzw. dessen Stutzen 34 an. Der genannte Ringraum endet in Richtung zum Absperrelement 8 an einer Stufe 36, an welcher das erste Dichtelement 32 abgestützt ist.

An die axiale Stirnfläche des Stutzens 34 schließt ein Ringkörper 38 an, dessen Innenfläche ebenso wie die des Stutzens 34 mit einer Auskleidung 40 versehen ist. Die Auskleidung 40 weist über ihre axiale Länge und / oder über die Gesamtlänge des Ringkörpers 38 einen in zweckmäßiger Weise gleichbleibenden Innendurchmesser 41 auf. Der Innendurchmesser 41 ist im wesentlichen gleich groß wie der Innendurchmesser der Auskleidung 20 des Stutzens 34. Zwischen der Innenfläche des Ringkörpers 38 bzw. dessen inneren Auskleidung 40 ist in einem Ringraum ein zweites Dichtelement 42 angeordnet. Das zweite Dichtelement 42 liegt radial außen direkt an der Innenfläche der inneren Auskleidung 40 und andererseits radial innen an dem Schaft 10, und zwar dessen Beschichtung 24 an.

Die Stirnfläche des Stutzens 34 und die axial gegenüberliegende Anlagefläche des Ringkörpers 38 enthalten koaxiale und miteinander korrespondierende Stufen oder Ringbunde 44, 46 derart, daß der Ringkörper 38 koaxial zur Drehachse 14 angeordnet ist. Mittels des zweiten im Bereich des Ringkörpers 38 angeordneten Dichtelements 42 erfolgt in Kombination mit dem ersten Dichtelement 32 eine den verbesserten und erhöhten Sicherheitsanforderungen entsprechende Abdichtung des Schaftes 10. Mittels einer dem zweiten Dichtelement 42 von der Außenseite her zugeordneten Buchse 48 erfolgt in zweckmäßiger Weise die gemeinsame Verpressung und Vorspannung der beiden in Wirkungsrichtung hintereinander geschalteten Dichtelemente 32 und 42, zwischen welchen in axialer Richtung vorzugsweise ein Ring 49 vorgesehen ist. Zur Vorgabe bzw. Begrenzung der Drehbewegung des Handgriffes 12 ist ein Anschlag 50 vorgesehen, welcher auf dem Ringkörper 38 befestigt ist. Der Ringkörper 38 besitzt für den Anschlag 50 eine Stufe 52, welche übereinstimmend mit der Stufe 44 des Stutzens 34 ausgebildet ist.

Der axial an den Stutzen 34 anschließende und diesen verlängernde Ringkörper 38 enthält ferner eine seitliche Bohrung 54, welche mittels einer Schraube 56 an der Außenseite dicht verschließbar ist. Die Bohrung 54 mündet innen vorzugsweise im Bereich des Ringes 49 zwischen den beiden Dichtelementen 32, 34 und ermöglicht eine Kontrolle oder Überprüfung der Dichtfunktion. Sofern ein erhöhter Druck oder Medium in dem Zwischenraum, also in Druckrichtung hinter dem ersten Dichtelement 32 festgestellt wird, stehen Revisionsmaßnahmen an. Mittels des zweiten Dichtelements 42 wird gewährleistet, daß auch in diesem Fall ein Austritt von strömendem Medium in den Außenraum im Hinblick auf die erhöhten Sicherheitsanforderungen unterbunden wird.

Fig. 2 zeigt teilweise in einer axialen Ansicht und teilweise geschnitten den Kugelhahn mit dem Ringkörper 38 und der Buchse 48, welche als Brille zur Erzeugung der axialen Vorspannung auf die beiden Dichtelemente 32 und 42 ausgebildet ist. Mittels Schraubbolzen 58 ist die Buchse oder Stopfbuchsenbrille 48 im Stutzen 34 des ersten Gehäuseteils 2 fixiert. Die Schraubbolzen 58 enthalten einen vorzugsweise als Sechskant ausgebildeten Anschlag 60, welcher zum einen das Einschrauben der Schrauben 56 in den Stutzen 34 ermöglicht und welcher zum anderen die definierte Festlegung des Ringkörpers 38 bzgl. des Gehäuseteils 2 sicherstellt. Die Schraubbolzen 58 durchdringen mit ihren oberen Enden Bohrungen der Brille 48, welche mittels nachstellbaren Muttern 62 in Richtung der Drehachse 14 somit einstellbar ist. Die Brille 48 umgibt mit einem kleinen Ringspalt einen Verlängerungsteil 64 des Schaftes 10. In diesem Ringspalt ist bevorzugt eine innere Buchse angeordnet, welche nachfolgend noch zu erläutern ist. Der Verlängerungsteil 64 enthält einen oben aus der Brille 48 herausragenden Zapfen 66, welcher insbesondere als Vierkant ausgebildet ist und welcher zur drehfesten Verbindung mit dem erwähnten Handgriff oder Betätigungsorgan ausgebildet ist. Der Zapfen 66 ist korrespondierend mit einem Zapfen, vorzugsweise Vierkant 68 versehen, welcher in eine korrespondierenden Ausnehmung 70 des Verlängerungskörpers eingreift. Über den Verlängerungskörper 64 wird somit die mittels des Betätigungsorgans bzw. Handgriffs eingeleitete Drehbewegung auf den Schaft 10 und somit auf das Absperrelement übertragen.

Die Ausnehmung 9 des Absperrelements 8 sowie der korrespondierend ausgebildete und in die Ausnehmung 9 eingreifende Ansatz 11 des Schaftes 10 sind gut zu erkennen. Die schlitzförmige Ausnehmung 9 erstreckt sich quer zur Achse der Durchflußöffnung 71. Die Achse der Durchflußöffnung 71, welche gemäß Zeichnung orthogonal zur Zeichenebene steht, ist orthogonal zur schlitzförmigen Ausnehmung 9 sowie dem plattenförmigen Ansatz 11 angeordnet. Die Breite der Platte bzw. des Ansatzes 11 und ebenso die Breite der Ausnehmung 9 sind größer als der Durchmesser der Schaftes 10. Es wird ausdrücklich festgehalten, daß der Schaft 10 mit dem Ansatz 11 mit der Beschichtung 24 versehen ist. Diese Beschichtung 24 ist in besonders zweckmäßiger Weise in radialer Richtung zumindest soweit nach außen geführt, daß auch das zweite Dichtelement 42 an der Beschichtung 24 anliegt. Somit werden zum einen Beschädigungen der Außenfläche des Schaftes zuverlässig und dauerhaft vermieden, und andererseits wird in zweckmäßiger Weise der Verschleiß auch des zweiten Dichtelements 42 auf ein Minimum reduziert.

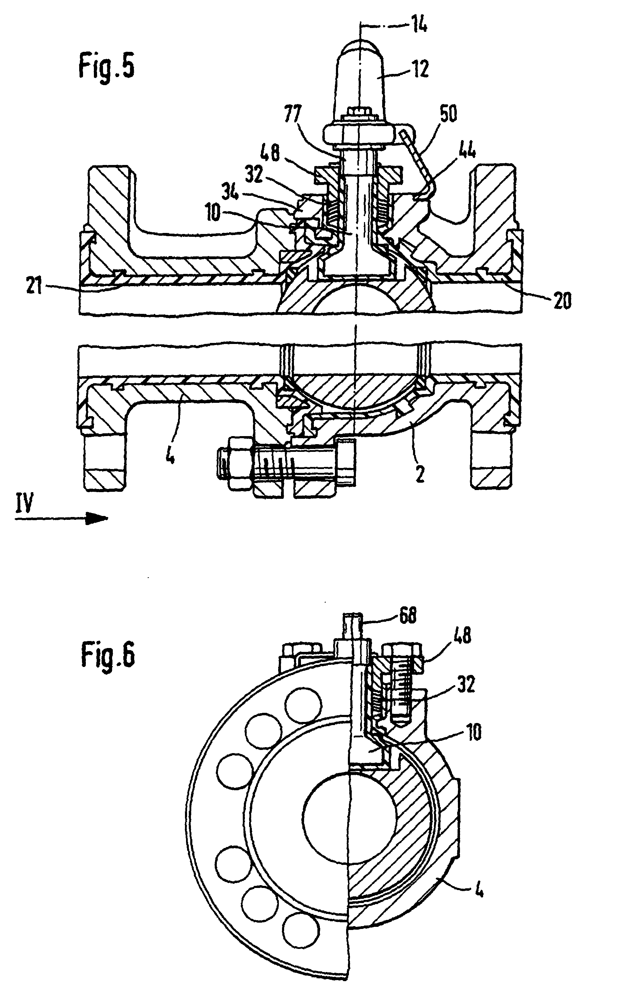

Anstelle der bisher erläuterten zweiteiligen Ausbildung von Absperrelement und Schaft, können diese auch einstückig ausgebildet sein. Bei einstückiger Ausbildung ist der Verlängerungskörper 64 von ganz besonderer Bedeutung, um die nachfolgend an Hand der Figuren 5 und 6 erläuterten Ausführungsform mit nur einem einzigen Dichtelement realisieren zu können. Der Schaft weist eine für beide Ausführungsformen einheitliche Länge auf. Aber auch bei der bisher erläuterten zweiteiligen Ausbildung von Absperrelement und Schaft ist die einheitliche Ausbildung und Längenvorgabe des Schaftes 10 von besonderer Bedeutung, zumal nur ein einziges Werkzeug zur Anfertigung und Anordnung der Beschichtung 24 auf dem Schaft 10 erforderlich ist. Andererseits liegen im Rahmen der Erfindung aber auch solche Ausgestaltungen mit zwei unterschiedlich langen Schäften. Der längere Schaft weist hierbei die Gesamtlänge von Schaft und Verlängerungskörper gemäß Figur 2 auf. Für die Ausführungsform mit nur einem Dichtelement gelangt hingegen nur der kurze Schaft gemäß Figur 2 zum Einsatz.

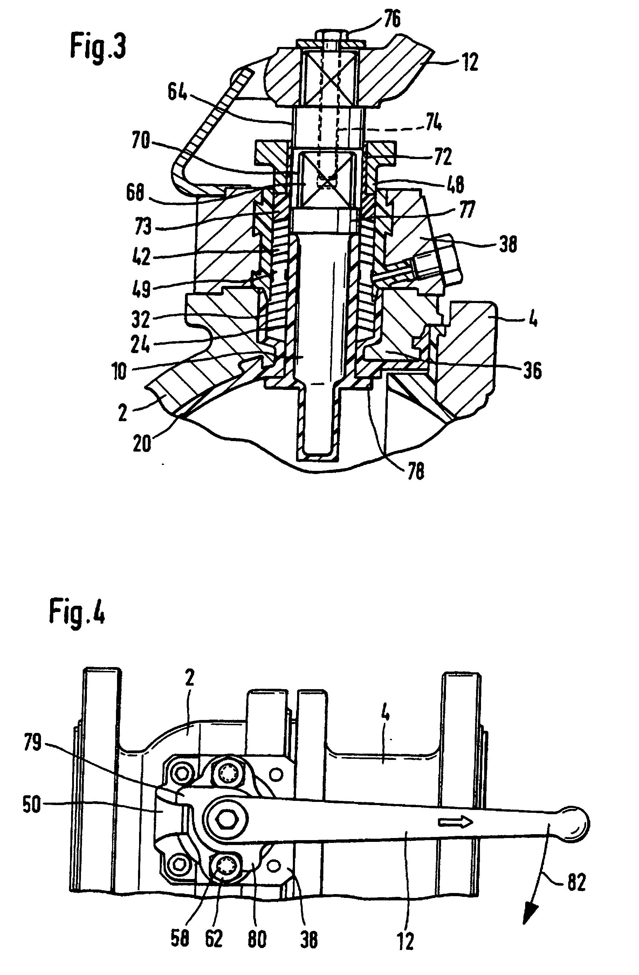

Fig. 3 zeigt vergrößert den oberen Teil der Ventilanordnung im Bereich des Schaftes 10 mit dem Verlängerungskörper 64 und einem Teil des Handgriffs 12. In zweckmäßiger Weise ist die Dicke der Scheibe bzw. des Ansatzes 11 kleiner als der Durchmesser des zylindrischen Zapfens 10. Auch die korrespondierende Ausnehmung des hier nicht dargestellten Absperrelements weist eine Dicke kleiner als der Schaftdurchmesser auf. In dem oben bereits erwähnten Ringspalt zwischen dem Verlängerungsstück 64 und der Buchse 48 ist eine innere Buchse 72 vorgesehen. Diese Buchse 72 dient in zweckmäßiger Weise zur radialen Führung des Verlängerungskörpers 64, so daß unerwünschte Kräfte auf den Schaft 10 und / oder das hier nicht dargestellte Absperrelement vermieden werden. Die innere Buchse 72 dient im Rahmen der Erfindung des weiteren als Auskleidung der Buchse 48. Die Buchse 72 enthält ferner einen erweiterten Teil 73, welcher am zweiten Dichtelement 42 anliegt. Über den erweiterten Teil 73 werden die axialen Einstell- bzw. Vorspannkräfte von der Brille 48 auf die Dichtelemente 42, 32 übertragen. Es ist hier gut erkennbar, daß die Schaftbeschichtung 24 in radialer Richtung bis in den Bereich des zweiten Dichtelements 42 reicht. Die Beschichtung 24 endet an einem Ringbund 77 des Schaftes 10. Der Außendurchmesser des Ringbundes 77 ist bevorzugt im wesentlichen gleich groß wie der Außendurchmesser der Beschichtung 24. Wie ersichtlich, liegt die zweite Dichtung 42 teilweise an der Beschichtung 24 und teilweise auch an dem Ringbund 77 an, wobei die Dichtung 42 in axialer Richtung durchgehend den gleichen Durchmesser aufweist.

Schließlich besitzt die Beschichtung 24 einen radialen Flansch 78, dessen Außendurchmesser um einen vorgegebenen Betrag größer ist als der Außendurchmesser der Beschichtung im Bereich der erläuterten Dichtungen 32 und 42. Der Flansch 78 liegt mit seiner gemäß Zeichnung oberen Fläche an der Auskleidung 20 des Gehäuse 2 bzw. dessen Stufe 36 an. Hierdurch wird in besonders zweckmäßiger Weise eine axiale Sicherung des Zapfens 10 gewährleistet, der bedarfsweise innerhalb des Flansches 78 gleichfalls einen Flansch aufweisen kann. Da der Flansch 78 der Beschichtung 24 ebenso wie die Auskleidung 20 in bevorzugter Weise aus Kunststoff bestehen, werden Reibungsverluste auf ein Minimum reduziert.

Der Verlängerungskörper 64 enthält eine zentrale Bohrung 74, durch welche eine Schraube 76 hindurchgeführt ist und mit ihrem unteren Ende in ein Innengewinde des Schaftes 10 bzw. dessen Zapfen 68 eingeschraubt ist. Mittels dieser Schraube 76 erfolgt die drehfeste Verbindung sowohl des Handgriffs 12 als auch des Verlängerungskörpers 64 mit dem Schaft 10. Wie bereits erläutert, wird durch axiale Verstellung der Buchse 48 die Vorspannung der beiden in Wirkungsrichtung hintereinandergeschalteten Dichtelemente 32 und 42 definiert vorgegeben.

Fig. 4 zeigt eine Aufsicht von oben auf den Kugelhahn mit den beiden Gehäuseteilen 2, 4 und dem Ringkörper 38, welcher über die beiden Schraubbolzen 58 mit dem Stutzen des Gehäuseteils 2 verbunden ist. Die Stoffbuchsenbrille 48 wird mittels den Muttern 62 zur Vorgabe der Vorspannung der erläuterten Dichtelemente eingestellt. Der Handgriff 12 besitzt zwei mit dem Anschlag 50 korrespondierende Vorsprünge 79, 80 und kann somit in Richtung des Pfeiles 82 geschwenkt werden, wobei die Kugel 8 aus der in Fig. 1 dargestellten geöffneten Position in die Absperrposition geschwenkt wird.

Fig. 5 und 6 zeigen eine Ausführungsform des Kugelhahns entsprechend dem Kugelhahn gemäß Fig. 1 und 2. Die Gehäuseteile 2, 4 und ebenso der Schaft 10 sind mit der eingangs erläuterten Ausführungsform identisch ausgebildet und ebenso das erste Dichtelement 32 im Stutzen 34 des Gehäuseteils 2. Es sei angemerkt, daß in Fig. 5 die beiden Gehäuseteile 2, 4 im Vergleich mit Fig. 1 in einer bezüglich der Drehachse 14 um 180° gedrehten Position dargestellt sind. Der Handgriff 12 ist bei dieser Ausführungsform unmittelbar mit dem Schaft 10 verbunden, wobei der erläuterte Verlängerungskörper, der Ringkörper und das zweite Dichtelement entfallen. Die Buchse bzw. Stopfbuchsenbrille 48 ist wieder die gleiche wie bei der ersten Ausführungsform, jedoch unmittelbar mit dem Gehäuse verbunden. Der Ringbund 77 ragt bei dieser Ausgestaltung teilweise in die Buchse 28 hinein. Andererseits reicht von innen her die Beschichtung 24 gleichfalls in die Buchse 28 hinein. Eine funktionssichere radiale Führung des Schaftes 10 ist somit gewährleistet.

Die Fertigung der Auskleidungen 20, 21 der beiden Gehäuseteile 2, 4 erfolgte ebenso mit den gleichen Werkzeugen wie für die beiden Gehäuseteile der ersten Ausführungsform. Der Anschlag 50 ist an der Stufe 44 des Stutzens 34 in seiner Drehposition gesichert, wobei die Stufe 44 übereinstimmend ausgebildet und angeordnet ist, wie die anhand von Fig. 1 erläuterte Stufe für den dort vorgesehenen Ringkörper. Die anhand von Fig. 5 und 6 erläuterte Ausführungsform besitzt eine einfache Schaftabdichtung in Form des ersten Dichtelements 32, doch sind die wesentlichen Komponenten, wie insbesondere die Gehäuseteile 2, 4, der Schaft 10, ferner das erste Dichtelement 32, die Brille 48, der Anschlag 50 sowie der Handgriff 12 übereinstimmend mit der ersten Ausführungsform ausgebildet.

### Bezugszeichen

- 2, 4: Gehäuseteil
- 6: Schraube
- 8: Absperrelement/Kugel
- 9: Ausnehmung
- 10: Schaft
- 11: Ansatz
- 12: Handgriff
- 14: Drehachse
- 16, 18: Flansch
- 20, 21: Auskleidung von 2, 4
- 22: Beschichtung von 8
- 24: Beschichtung von 10
- 26, 28: Dichtring
- 30: Bohrung
- 32: erstes Dichtelement
- 34: Stutzen von 2
- 36: Stufe
- 38: Ringkörper
- 40: Auskleidung von 38
- 41: Innendurchmesser von 40
- 42: zweites Dichtelement
- 44, 46: Stufe, Ringbund
- 48: Buchse/Brille
- 49: Ring
- 50: Anschlag
- 52: Stufe von 38
- 54: Bohrung in 38
- 56: Schraube
- 58: Schraubbolzen
- 60: Anschlag
- 62: Mutter
- 64: Verlängerungskörper
- 66: Zapfen/Vierkant von 64
- 68: Zapfen/Vierkant von 10
- 70: Ausnehmung in 64
- 71: Durchflußöffnung
- 72: innere Buchse
- 73: erweiterter Teil
- 74: zentrale Bohrung in 48
- 76: Schraube
- 77: Ringbund
- 78: Flansch
- 79, 80: Vorsprung
- 82: Pfeil

## Patentansprüche

1. Ventilanordnung mit einem Gehäuse, welches zwei eine Auskleidung (20, 21) aufweisende Gehäuseteile (2, 4) aufweist, mit einem im Gehäuse (2, 4) drehbar angeordneten Absperrelement (8), mit einem eine Beschichtung (24) aufweisenden Schaft (10), welcher mit dem Absperrelement (8) zum Drehen desselben gekoppelt ist und welcher durch einen Stutzen (34) durch das Gehäuse nach außen geführt ist, und mit einem ersten Dichtelement (32), welches unmittelbar in einem den Schaft (10) umgebenden Ringraum angeordnet ist, welcher in Richtung zum Absperrelement (8) an einer Stufe (36) zum Abstützen des ersten Dichtelements (32) endet,
wobei mittels einer Buchse (48), welche mit dem Stutzen (34) verbunden und in Richtung der Drehachse (14) des Schafts (10) bewegbar ist, das erste Dichtelement (32) vorspannbar ist und wobei die Beschichtung (24) einen Flansch (78) aufweist,
wobei der Stutzen (34) Bestandteil des einen Gehäuseteiles (2) ist, wobei das erste Dichtelement (32) an der in den Stutzen (34) reichenden Auskleidung (20) des einen Gehäuseteils (2) anliegt, daß der Flansch (78) der Beschichtung (24) des Schaftes (10) mit einer dem Absperrelement (8) abgewandten oberen Fläche an der Auskleidung (20) des Gehäuseteils (2) anliegt, **dadurch gekennzeichnet, daß** die Ventilanordnung derart gestaltet ist,
daß wahlweise eine einfache Schaftabdichtung, enthaltend das erste Dichtelement (32), vorgesehen sein kann oder eine doppelte Schaftabdichtung, enthaltend das erste Dichtelement (32) und ein zweites Dichtelement (42) vorgesehen sein kann,
wobei in der Ausführungsform mit der doppelten Schaftabdichtung ein Ringkörper (38) in Richtung der Drehachse (14) an dem Stutzen (34) des Gehäuses (2) nach außen axial anschließend angeordnet ist und das zweite Dichtelement (42) zumindest teilweise in dem Ringkörper (38) angeordnet ist und an der Beschichtung (24) des Schaftes (10) anliegt und ferner mit dem Schaft (10) ein Verlängerungskörper (24) drehfest verbunden ist, über welchen auf den Schaft (10) und somit das Absperrelement (8) eine Drehbewegung einleitbar ist
und daß die Buchse (48), mittels welcher das erste Dichtelement (32) und wahlweise das zweite Dichtelement (48) vorspannbar ist, mittels Schraubbolzen (58) im Stutzen (34) des Gehäuseteils (2) fixiert ist.

2. Ventilanordnung nach Anspruch 1, **dadurch gekennzeichnet, daß** der Ringkörper (38) zumindest im Bereich des zweiten Dichtelements (42) eine Auskleidung (40) aufweist und/oder daß der Innendurchmesser (41) der Auskleidung (40) des Ringkörpers (38) zumindest näherungsweise gleich groß ist wie der Innendurchmesser der Auskleidung (20) in der Bohrung (30) des Stutzens (34) des Gehäuseteils (2).

3. Ventilanordnung nach Anspruch 1 oder 2, **dadurch gekennzeichnet, daß** die Beschichtung (24) des Schaftes (10) sich in Richtung der Drehachse (14) durchgehend vom Gehäuseinneren bis zu dem zweiten Dichtelement (42) erstreckt.

4. Ventilanordnung nach Anspruch 2 oder 3, **dadurch gekennzeichnet, daß** die Auskleidung (40) des Ringkörpers (38) axial im Anschluß an die Auskleidung (20) innerhalb des Stutzens (34) angeordnet ist.

5. Ventilanordnung nach einem der Ansprüche 1 bis 4, **dadurch gekennzeichnet, daß** der Außendurchmesser des Flansches (78) um einen vorgegebenen Betrag größer ist als der Außendurchmesser der Beschichtung (24) des Schaftes (10) im Bereich des ersten Dichtelements (32).

6. Ventilanordnung nach einem der Ansprüche 1 bis 5, **dadurch gekennzeichnet, daß** der Ringkörper (38) eine Bohrung (54) aufweist, welche radial innen, vorzugsweise im Bereich zwischen den beiden Dichtelementen (32, 42) endet und welche außen, vorzugsweise mittels einer Schraube (56), dicht verschließbar ist, und/oder daß die Auskleidung (40) des Ringkörpers (38) über die Gesamtlänge einen im wesentlichen konstanten Innendurchmesser (41) aufweist.

7. Ventilanordnung nach einem der Ansprüche 1 bis 6, **dadurch gekennzeichnet, daß** der Verlängerungskörper (64) eine Ausnehmung (70) aufweist, in welche ein korrespondierend ausgebildeter Zapfen (68) des Schaftes (10) eingreift, und daß der Verlängerungskörper (64) am oberen Ende, insbesondere zur drehfesten Verbindung mit einem Handgriff (12), einen weiteren Zapfen (66) aufweist, welcher entsprechend dem Zapfen (68) des Schaftes (10) ausgebildet ist.

8. Ventilanordnung nach einem der Ansprüche 1 bis 7, **dadurch gekennzeichnet, daß** die beiden Dichtelemente (32, 42) zumindest näherungsweise übereinstimmend ausgebildet sind und/oder als Packungen, insbesondere als PTFE-Packungen, ausgebildet sind.

9. Ventilanordnung nach einem der Ansprüche 1 bis 8, **dadurch gekennzeichnet, daß** axial zwischen dem ersten Dichtetement (32) und dem zweiten Dichtelement (42) ein Ring (49) angeordnet ist.

10. Ventilanordnung nach einem der Ansprüche 1 bis 9, **dadurch gekennzeichnet, daß** zwischen dem Verlängerungskörper (64) und der Buchse (48) eine innere Buchse (72) vorgesehen ist und/oder daß die innere Buchse (72) als eine Auskleidung der Buchse (48) ausgebildet ist und/oder daß die innere Buchse (72) einen erweiterten Teil (73) aufweist, an welchem das zweite Dichtelement (42) anliegt.

11. Ventilanordnung nach einem der Ansprüche 1 bis 10, **dadurch gekennzeichnet, daß** die Beschichtung (24) an einem Ringbund (77) des Schaftes (10) endet und/oder daß der Außendurchmesser des Ringbundes (77) im wesentlichen gleich groß ist wie der Außendurchmesser der Beschichtung (24).

12. Ventilanordnung nach Anspruch 11, **dadurch gekennzeichnet, daß** der Ringbund (77) teilweise in die Buchse (48) hineinragt.

13. Ventilanordnung nach Anspruch 11 oder 12, **dadurch gekennzeichnet, daß** in der zweiten Ausführungsform das zweite Dichtelement (42) teilweise am Ringbund (77) anliegt.

## Claims

1. Valve arrangement comprising a housing having two housing parts (2, 4) with a lining (20, 21), a shut-off element (8) rotatably arranged in the housing (2, 4), a stem (10) with a coating (24) coupled to the shut-off element (8) for the rotation thereof and guided outwardly through the housing through a port (34) and a first sealing element (32) arranged directly in an annular space surrounding the stem (10) and ending in the direction of the shut-off element (8) in a step (36) for supporting the first sealing element (32), wherein the first sealing element (32) can be preloaded by means of a sleeve (48) connected to the port (34) and movable in the direction of the axis of rotation (14) of the stem (10), the coating (24) has a flange (78), the port (34) is part of one housing part (2), the first sealing element (32) bears against the lining (20) of one housing part (2) extending into the port (34) and the flange (78) of the coating (24) of the stem (10) bears via an upper surface directed away from the shut-off element (8) against the lining (20) of the housing part (2), **characterised in that** the valve arrangement is designed in such a manner that either a single stem seal containing the first sealing element (32) may be provided or a double stem seal containing the first sealing element (32) and a second sealing element (42) may be provided, wherein, in the embodiment with the double stem seal, an annular body (38) axially outwardly adjoins the port (34) of the housing (2) in the direction of the axis of rotation (14) and the second sealing element (42) is arranged at least partially in the annular body (38) and bears against the coating (24) of the stem (10) and an extension body (64) is furthermore connected in a torsionally rigid manner to the stem (10), by means of which the stem (10) and therefore the shut-off element (8) can be rotated, and that the sleeve (48) by means of which the first sealing element (32) and possibly the second sealing element (42) can be preloaded is fixed by means of screw bolts (58) in the port (34) of the housing part (2).

2. Valve arrangement according to claim 1, **characterised in that** the annular body (38) is provided at least in the region of the second sealing element (42) with a lining (40) and/or that the inner diameter (41) of the lining (40) of the annular body (38) is at least approximately identical to the inner diameter of the lining (20) in the bore (30) in the port (34) of the housing part (2).

3. Valve arrangement according to claim 1 or claim 2. **characterised in that** the coating (24) of the stem (10) extends in the direction of the axis of rotation (14) from the interior of the housing through to the second sealing element (42).

4. Valve arrangement according to claim 2 or claim 3, **characterised in that** the lining (40) of the annular body (38) axially adjoins the lining (20) within the port (34).

5. Valve arrangement according to one of claims 1 to 4, **characterised in that** the outer diameter of the flange (78) is larger than the outer diameter of the coating (24) of the stem (10) in the region of the first sealing element (32) by a predetermined amount.

6. Valve arrangement according to one of claims 1 to 5, **characterised in that** the annular body (38) has a bore (54) which ends radially inwardly, preferably in the region between the two sealing elements (32, 42) and which can be closed outwardly in a sealed manner, preferably by means of a screw (56), and/or that the lining (40) of the annular body (38) has a substantially constant inner diameter (41) over its entire length.

7. Valve arrangement according to one of claims 1 to 6, **characterised in that** the extension body (64) has a recess (70) engaged by a corresponding journal (68) of the stem (10) and that the extension body (64) is provided at its upper end with a further journal (66) corresponding to the journal (68) of the stem (10), in particular for connection to a handle (12) in a torsionally rigid manner.

8. Valve arrangement according to one of claims 1 to 7, **characterised in that** the two sealing elements (32, 42) are at least approximately identical and/or are in the form of packings, in particular PTFE packings.

9. Valve arrangement according to one of claims 1 to 8, **characterised in that** a ring (49) is arranged axially between the first sealing element (32) and the second sealing element (42).

10. Valve arrangement according to one of claims 1 to 9, **characterised in that** an inner sleeve (72) is provided between the extension body (64) and the sleeve (48) and/or that the inner sleeve (72) is in the form of a lining of the sleeve (48) and/or that the inner sleeve (72) has an expanded part (73) against which the second sealing element (42) bears.

11. Valve arrangement according to one of claims 1 to 10, **characterised in that** the coating (24) ends in an annular collar (77) of the stem (10) and/or that the outer diameter of the annular collar (77) is substantially identical to the outer diameter of the coating (24).

12. Valve arrangement according to claim 11, **characterised in that** the annular collar (77) projects partially into the sleeve (48).

13. Valve arrangement according to claim 11 or claim 12, **characterised in that**, in the second embodiment, the second sealing element (42) bears partially against the annular collar (77).

## Revendications

1. Système de vanne avec un boîtier, qui comprend deux parties (2, 4) de boîtier présentant une garniture (20, 21), avec un élément de fermeture (8) placé rotatif dans le boîtier (2, 4), avec une tige (10) présentant un revêtement (24) et qui est couplée à l'élément de fermeture (8) pour la rotation de celui-ci et est guidée vers l'extérieur à travers le boîtier par un embout (34), et avec un premier élément d'étanchéité (32) qui est placé directement dans une chambre annulaire entourant la tige (10), qui se termine en direction de l'élément de fermeture (8) au niveau d'un gradin (36) destiné à soutenir le premier élément d'étanchéité (32), le premier élément d'étanchéité (32) pouvant être précontraint au moyen d'un manchon (48) qui est relié à l'embout (34) et peut être déplacé dans la direction de l'axe de rotation (14) de la tige (10), et le revêtement (24) présentant une bride (78),
l'embout (34) faisant partie de la première partie (2) de boîtier, le premier élément d'étanchéité (32) s'appuyant contre la garniture (20) de la première partie (2) de boîtier qui arrive dans l'embout (34), la bride (78) du revêtement (24) de la tige (10) s'appuyant avec une surface supérieure opposée à l'élément de fermeture (8) contre la garniture (20) de la partie (2) de boîtier,
***caractérisé en ce que*** le système de vanne est conformé de telle manière qu'au choix, une étanchéité de tige simple comprenant le premier élément d'étanchéité (32) peut être prévue, ou bien une étanchéité de tige double comprenant le premier élément d'étanchéité (32) et un deuxième élément d'étanchéité (42) peut être prévue,
un corps annulaire (38) étant placé, dans le mode de réalisation avec la double étanchéité de tige, dans la direction de l'axe de rotation (14) contre l'embout (34) du boîtier (2) en faisant suite axialement à l'extérieur et le deuxième élément d'étanchéité (42) étant placé au moins partiellement dans le corps annulaire (38) et s'appuyant contre le revêtement (24) de la tige (10) et un corps de prolongement (24) étant de plus relié de manière solidaire en rotation à la tige (10), corps par l'intermédiaire duquel un mouvement de rotation peut être appliqué sur la tige (10), donc sur l'élément de fermeture (8),
et ***en ce que*** le manchon (48), au moyen duquel le premier élément d'étanchéité (32) et au choix le deuxième élément d'étanchéité (42) peut être mis sous précontrainte, est fixé dans l'embout (34) de la partie (2) de boîtier au moyen de boulons (58).

2. Système de vanne selon la Revendication 1, ***caractérisé en ce que*** le corps annulaire (38) présente une garniture (40) au moins au niveau du deuxième élément d'étanchéité (42) et/ou ***en ce que*** le diamètre intérieur (41) de la garniture (40) du corps annulaire (38) est au moins approximativement aussi grand que le diamètre intérieur de la garniture (20) dans le perçage (30) de l'embout (34) de la partie (2) de boîtier.

3. Système de vanne selon la Revendication 1 ou 2, ***caractérisé en ce que*** le revêtement (24) de la tige (10) s'étend en direction de l'axe de rotation (14) de manière continue de l'intérieur du boîtier jusqu'au deuxième élément d'étanchéité (42).

4. Système de vanne selon la Revendication 2 ou 3, ***caractérisé en ce que*** la garniture (40) du corps annulaire (38) est placée axialement à la suite de la garniture (20) dans l'embout (34).

5. Système de vanne selon l'une quelconque des Revendications 1 à 4, ***caractérisé en ce que*** le diamètre extérieur de la bride (78) est supérieur d'une valeur prédéterminée au diamètre extérieur du revêtement (24) de la tige (10) au niveau du premier élément d'étanchéité (32).

6. Système de vanne selon l'une quelconque des Revendications 1 à 5, ***caractérisé en ce que*** le corps annulaire (38) présente un perçage (54) qui se termine radialement à l'intérieur, de préférence dans la zone entre les deux éléments d'étanchéité (32, 42) et qui peut être fermé hermétiquement à l'extérieur, de préférence au moyen d'une vis (56), et/ou ***en ce que*** la garniture (40) du corps annulaire (38) présente sur toute la longueur un diamètre intérieur (41) sensiblement constant.

7. Système de vanne selon l'une quelconque des Revendications 1 à 6, ***caractérisé en ce que*** le corps de prolongement (64) présente un évidement (70) dans lequel s'engage un tenon (68) de la tige (10) de conformation correspondante, et ***en ce que*** le corps de prolongement (64) présente à l'extrémité supérieure, en particulier pour la liaison solidaire en rotation avec une poignée (12), un autre tenon (66) qui est conformé de manière correspondante au tenon (58) de la tige (10).

8. Système de vanne selon l'une quelconque des Revendications 1 à 7, ***caractérisé en ce que*** les deux éléments d'étanchéité (32, 42) sont conformés au moins approximativement de manière coïncidente et/ou sont conformés en garnitures d'étanchéité, en particulier en garnitures d'étanchéité en PTFE.

9. Système de vanne selon l'une quelconque des Revendications 1 à 8, **caractérisé *en ce qu'***une bague (49) est placée entre le premier élément d'étanchéité (32) et le deuxième élément d'étanchéité (42).

10. Système de vanne selon l'une quelconque des Revendications 1 à 9, ***caractérisé en ce qu'***un manchon intérieur (72) est placé entre le corps de prolongement (64) et le manchon (48) et/ou ***en ce que*** le manchon intérieur (72) est conformé en garniture du manchon (78) et/ou ***en ce que*** le manchon intérieur (72) présente une partie élargie (73) contre laquelle s'appuie le deuxième élément d'étanchéité (42).

11. Système de vanne selon l'une quelconque des Revendications 1 à 10, ***caractérisé en ce que*** le revêtement (24) se termine au niveau d'une collerette annulaire (77) de la tige (10) et/ou ***en ce que*** le diamètre extérieur de la collerette annulaire (77) est pour l'essentiel aussi grand que le diamètre extérieur du revêtement (24).

12. Système de vanne selon la Revendication 11, ***caractérisé en ce que*** la collerette annulaire (77) dépasse partiellement dans le manchon (48).

13. Système de vanne selon la Revendication 11 ou 12, ***caractérisé en ce que,*** dans le deuxième mode de réalisation, le deuxième élément d'étanchéité (42) s'appuie partiellement contre la collerette annulaire (77).
